# EUROPEAN PATENT SPECIFICATION

(11) **EP 2 356 911 B1**
(45) Date of publication and mention of the grant of the patent: **30.10.2013**
(21) Application number: 11151184.6
(22) Date of filing: 17.01.2011
(51) Int. Cl.: A23L 1/00, A21D 10/00

(54) **Microwaveable batter**
Mikrowellenerhitzbarer Teig
Pâte chauffable aux micro-ondes

(30) Priority: 15.01.2010 GB 201000647; 13.04.2010 GB 201006108; 13.04.2010 GB 201006097; 11.05.2010 GB 201007843
(43) Date of publication of application: 17.08.2011
(73) Proprietor: Crisp Sensation Holding SA, 1208 Geneva (CH)
(72) Inventor: Pickford, Keith, Manchester, M45 7QF (GB)
(74) Representative: Browne, Robin Forsythe

(56) References cited:
- US-A1- 2006 286 240
- US-B1- 6 261 625

## Description

This invention relates to a coating for foodstuffs, which is cookable or reheatable using a microwave oven, combination microwave oven or by radiant heat by any means. The invention relates particularly but not exclusively to microwaveable cookable or reheatable batters or breaded coatings.

Microwave ovens are commonly used for heating food products, which have been pre-prepared by a foodstuff manufacturer. Pre-prepared products include batter coated foodstuffs in which the basic foodstuff, for example meat, fish, poultry, vegetables, fruit or dairy products, has been coated in a batter optionally coated with crumbs, deep fried and then frozen for supply to a consumer.

Heating in a microwaveable oven may complete the cooking process or simply reheat a previously cooked product. Microwave cookable coatings have particular requirements. Microwave energy penetrates throughout a food product. Steam released from the core of a food product can cause the batter coating to become soggy. This impairs the texture and taste of the product.

WO 88/06007 disclosed a batter composition and method of preparation wherein the foodstuff is pre-dusted with high amylose starch and methylcellulose. The batter included high enzyme soya flour. WO93/003634 disclosed an improved pre-dust composition including a mixture of particulate starch and particulate cellulose gum, which gelled on heating in the presence of moisture. Such a pre-dust can form a dense, high viscosity barrier to absorption of oil and migration of moisture. The barrier also provides a stable environment for any seasoning and can enhance bonding with the batter. Although high enzyme soya flours generally afford acceptable products, variations in their enzyme content have given rise to inconsistent and occasionally undesirable flavours. WO96/032026 disclosed a microwaveable batter comprising starch, flour, a gelling agent, an enzyme, additive and further ingredients. An exemplified formulation comprised genetically modified high amylose maize flour.

It is the object of the present invention to provide a batter coating having improved properties during manufacture, storage and upon consumption.

Batter or breaded coatings in accordance with this invention are preferably cookable or reheatable using conventional ovens or fryers in addition to microwave ovens and combination microwave ovens.

According to a first aspect of the present invention, a microwave cookable or reheatable foodstuff coating composition comprises 55 to 80 wt% water and 20 to 45 wt% of a mixture comprising by dry weight
a) 24 to 32 wt% high amylose starch
b) 35 to 60 wt% of a flour component comprising a mixture of two or more gluten free flours including maize flour
c) a gelling agent
d) an enzyme additive comprising alpha amylase; and
e) optional further ingredients.

The amount of the starch component, excluding any starch which may be present in the flour, may comprise preferably about 29%, more preferably about 28.8% by weight of the dry ingredients.

The starch comprises high amylose starch, preferably maize starch, for example as manufactured under trademark HYLON 7 of National Starch. An amylose content of 60% to 80%, preferably 70%, is preferred. Use of a hot swell starch is preferred.

The flour component may comprise, preferably 40% to about 55%, more preferably about 48.2% by weight of the dry ingredients.

The percentage weight of flour based on the combined amount of flour and starch to starch components, that is non-flour starch, may be in the range of about 36% to about 87%, preferably about 50% to about 63%.

The flour component comprises a mixture of at least one first gluten free flour, preferably soya flour for example HiSoy supplied by Bake Mark UK manufactured from soya beans of Canadian origin and maize flour for example French maize flour YF36 manufactured by Smiths Flour Mills. Maize flour is gluten free. Gluten free flour referred to in this specification may contain less than 1% gluten, preferably less than 0.1 % gluten. In particularly preferred flours, gluten is completely absent.

The flour component may contain from about 25% to about 70% of maize flour and from about 30% to about 75% of one or more other gluten free flours.

The flour mixture preferably has a fat content of about 15-33%, more preferably about 20-28%, especially about 24%. Full fat soya flour may be employed.

A reducing sugar or mixture of reducing sugars may be used to give colour to the cooked coating. D-xylose is preferred although fructose, maltose or mixtures of these reducing sugars may be used. An amount of about 1-3% preferably about 2% is preferred.

The gelling agent or thickener (referred to for convenience as a gelling agent) is employed in an amount sufficient to stabilise the coating as an emulsion. One or more of the following may be employed: collagen, alginate, xanthan gum, gelatine, guar gum, agar gum, gum arabic, locust bean gum, or carrageenan gum. Use of guar gum or mixtures containing guar gum is preferred. Alternatively mixtures of guar and xanthan gums may be used. An amount of the gelling agent which is effective to provide a thickened composition may be used. An amount of about 0.1% to about 5%, preferably about 0.5% - to about 3% more preferably about 1 % may be employed. The gelling agent is preferably present in an amount sufficient to give long-term stability, for example to allow the batter to be stored before use.

The further ingredients may include whole egg. An amount of about 10-18%, preferably about 14% may be employed. The egg may comprise dried egg. This may comprise dried whole egg or a blend of egg white and egg yolk.

Glyceryl monostearate may be used as an emulsifier. Alternative emulsifiers may be used. An amount of 1% to 5%, preferably about 2% may be employed.

A phosphate may be employed in an amount of about 0.7 to 3% to adjust the pH for optimum enzyme activity. Monosodium phosphate in an amount of about 1.87% is preferred.

The further ingredients preferably include ammonium bicarbonate used as an aid to formulation. An amount of about 0.7% is preferred.

Glucono-D-lactone may be used as a slow release pH adjuster. An amount of about 0.67% may be employed.

Sodium acid pyrophosphate may be used to regulate pH. An amount of about 0.37% may be employed.

A thickener, for example methylcellulose, Methocel A4M may be used in an amount of about 0.1-1%, preferably about 0.25%.

Use of a coating composition in accordance with the first aspect of this invention confers several advantages. The coating adheres well to a substrate and to subsequently applied crumb. The coating allows escape of moisture during frying but does not give a high a degree of fat pickup from the frying oil. A shell-like coating is formed to give a desirably crisp bite.

The gel, batter and crumb form an integral, consolidated layer after cooking.

The enzyme additive is preferably a concentrated enzyme preparation. Enzyme containing conventional ingredients used in batter, for example high enzyme flours are inconsistent and are not preferred. However, the concentrated enzyme preparation may be blended with a further ingredient such as starch or flour to facilitate mixing into the composition. The enzyme preparation may contain buffers or stabilizers.

Preferred enzyme additives include bacterial amylases, for example, Novamyl BG10000.

The additive preferably contains only the enzymes required for the coating composition. Lipoxygenases or other enzymes, which may be present in commercial high enzyme flours are avoided since these may give rise to adverse flavours.

The viscosity of the coating composition before use is preferably in the range of about 400 to 700 cP, preferably about 550 cP measured using a Brookfield viscometer with a No 3 spindle at 60 rpm at 10°C.

The freshly mixed composition in the ratio of about 2 parts water and about 1 part batter may have a viscosity about 1500 to 1700 cP preferably about 1600 cP. After mixing in a high shear mixer, the temperature may be raised to 42°C. Following mixing the batter is stored and allowed to ferment. After storage, the mixture is diluted with water to give a final ratio of 2.4 parts of water to 1 part of batter mix to give a viscosity of about 550 cP.

The batter ingredients may be mixed in starter batches in the ratio of 2 parts of water to 1 of batter, and stored overnight, for example, in a chill room. The batter continues to ferment for about 24 hours at a decreasing rate until the temperature of the batch reaches approximately 5 °C. The viscosity increases overnight to a value between about 1000 cP and about 1600 cP depending on the batch. The mixer used may be a Silverson batch mixer with a high shear slotted disintegrating head.

A coating of pre-dust may be applied to the substrate before application of the batter composition. A conventional pre-dust may be used. A suitable predust may comprise modified starch (Thermoflo) 35%, methyl cellulose (Methocell A4M) 25%; xanthan gum 25% and egg albumin 15%..

Amounts and quantities referred to in this specification are by dry weight unless indicated otherwise. Percentages and other proportions are selected from ranges given to total 100%.

The invention is further described by means of example but not in any limitative sense

### Example 1 Coating Composition

A coating composition was prepared by mixing the following ingredients:

| Ingredient | % |
|---|---|
| soya flour (Hisoy) | 29.0 |
| high amylose starch (Hylon 7) | 28.8 |
| maize flour | 19.2 |
| dried whole egg (Henningsen W1) | 14.0 |
| glyceryl monostearate | 02.0 |
| D-xylose | 02.0 |
| monosodium phosphate | 01.9 |
| guar gum | 01.0 |
| ammonium bicarbonate | 00.7 |
| glucono-D-lactone | 00.7 |
| sodium acid pyrophosphate | 00.4 |
| thickener (Methocel A4M) | 00.2 |
| alpha-amylase | 00.1 |
| | 100.0 |

The batter can be mixed in batches using a Silverson DX high shear mixer on a gantry with a slotted disintegrating head. Batches were mixed in the ratio of 25 kilos water to 12.5 kilos dry batter powder in a vat with a diameter of 68 cm. Thereafter, the mix was diluted as required.

In full production the batter ingredients were mixed using two 200 litre stainless steel vessels linked by a pump and an inline Silverson mixer with a high shear slotted disintegrating head. One tank was fitted with a paddle and was filled with water at 15-20°C. The dry ingredients were added to the water and wetted by rotation of the paddle. The second tank was fitted with a cooling jacket and a return pipe to the first vessel. The batter mixture was circulated through the high shear head until a temperature of 42°C was reached by mechanical heat transfer. External heating may be employed to avoid a tendency to over shear the starch. When 42°C was reached, the mixing and enzymolyis were complete. The batter was transferred to the second vessel and cooled. A heat exchanger may be used to cool the mixture. After cooling, the batter was pumped into a tempura type batter applicator.

The viscosity in the batter mixture was in the range 550 - 650 cP as measured by a number 3 spindle at 60rpm. The batter was found to give a good rate of pickup and a crisp coating after frying.

### Example 2 Stabilisation of the substrate

The substrate may be stabilised using a composition as disclosed in EP-A 0839005.

### Example 3 Predust coating

A conventional pre-dust may be employed, for example as disclosed in WO9632026. The predust may be applied by passing the stabilised substrate pieces through a trough containing the powdered predust mixture.

### Example 4 Batter and Crumb application

A fine crumb was prepared as disclosed in WO 2010/001101.

Following application of the pre-dust a fine crumb was applied with a mesh size less than 1mm or described as a dust, using a CFS Crumbmaster breadcrumb applicator.

The coated particles were passed through the batter of Example 1 in a tempura batter applicator.

A 2mm crumb was applied in a second CFS Crumbmaster breadcrumb applicator with slight pressure from a roller. Particles were passed through a third CFS Crumbmaster breadcrumb applicator to infill with a 1mm crumb using light pressure from a roller.

### Example 5 Frying and cooking

The coated substrate was fried in pure, fresh rapeseed oil for 2 minutes 20 seconds approximately at 180-188°C. The frying time can be varied depending upon the weight and size of the particles. After frying, the core temperature was 74 - 85°C. A small loss of weight was observed due to loss of water from the substrate but this is mostly compensated for by the uptake of oil.

## Claims

1. A microwave cookable or reheatable foodstuff coating composition comprising 55 to 80 wt% water and 20 to 45 wt% of a mixture comprising by dry weight:
a) 24 to 32 wt% high amylose starch
b) 35 to 60 wt% of a flour component comprising a mixture of two or more gluten free flours including maize flour
c) a gelling agent
d) an enzyme additive comprising alpha amylase; and
e) optional further ingredients.

2. A coating composition as claimed in claim 1 wherein the coating composition comprises from about 40 to about 55% of the flour component by dry weight.

3. A coating composition as claimed in any preceding claim wherein the flour component comprises a mixture of soya flour and maize flour.

4. A coating composition as claimed in any preceding claim wherein the flour mixture has a fat content from about 15% to about 33%.

5. A coating composition as claimed in any preceding claim wherein the weight ratio of flour to starch component is in the range from about 36:64 to about 87:13.

6. A coating composition as claimed in claim 5 wherein the weight ratio of flour to starch component is from about 50:50 to about 63:37.

7. A coating composition as claimed in any preceding claim wherein the flour component contains from about 25% to about 70% by dry weight of maize flour and from about 30% to about 75% by dry weight of one or more other gluten free flours.

8. A coating composition as claimed in any preceding claim including D-xylose in an amount from about 1% to about 3% by dry weight.

9. A coating composition as claimed in any preceding claim, wherein the amount of the gelling agent is from about 0.1 dry wt% to about 5 dry wt%.

10. A coating composition as claimed in any preceding claim wherein the gelling agent comprises guar gum.

11. A coating composition as claimed in any preceding claim having a viscosity of about 400 cP to about 700 cP at 10°C using a Brookfield viscometer with a number 3 spindle to 60 rpm.

12. A microwave cookable or reheatable food composition comprising a coating as claimed in any of claims 1 to 11.

## Patentansprüche

1. Beschichtungszusammensetzung für ein Nahrungsmittel, das sich in der Mikrowelle kochen oder aufwärmen läßt,
die 55 bis 80 Gew.-% Wasser und 20 bis 45 Gew.-% eines Gemischs aufweist, das auf das Trockengewicht bezogen folgendes aufweist:
a) 24 bis 32 Gew.-% amylosereiche Stärke
b) 35 bis 60 Gew.-% einer Mehlkomponente, die ein Gemisch von zwei oder mehr glutenfreien Mehlsorten, einschließlich Maismehl, aufweist,
c) ein Geliermittel,
d) einen Enzymzusatz, der α-Amylase aufweist, und
e) gegebenenfalls weitere Bestandteile.

2. Beschichtungszusammensetzung nach Anspruch 1,
wobei die Beschichtungszusammensetzung etwa 40 % bis etwa 55 % der Mehlkomponente aufweist, und zwar auf das Trockengewicht bezogen.

3. Beschichtungszusammensetzung nach einem der vorstehenden Ansprüche,
wobei die Mehlkomponente ein Gemisch von Sojamehl und Maismehl aufweist.

4. Beschichtungszusammensetzung nach einem der vorstehenden Ansprüche,
wobei das Mehlgemisch einen Fettgehalt von etwa 15 % bis etwa 33 % aufweist.

5. Beschichtungszusammensetzung nach einem der vorstehenden Ansprüche,
wobei das Gewichtsverhältnis zwischen der Mehlkomponente und der Stärkekomponente im Bereich von etwa 36:64 bis etwa 87:13 liegt.

6. Beschichtungszusammensetzung nach Anspruch 5,
wobei das Gewichtsverhältnis zwischen der Mehlkomponente und der Stärkekomponente etwa 50:50 bis etwa 63:37 beträgt.

7. Beschichtungszusammensetzung nach einem der vorstehenden Ansprüche,
wobei die Mehlkomponente etwa 25 % bis etwa 70 % Maismehl und etwa 30 % bis etwa 75 % von einer oder mehreren anderen glutenfreien Mehlsorten aufweist, und zwar jeweils auf das Trockengewicht bezogen.

8. Beschichtungszusammensetzung nach einem der vorstehenden Ansprüche, die D-Xylose in eine Menge von etwa 1 % bis 3 % aufweist, und zwar auf das Trockengewicht bezogen.

9. Beschichtungszusammensetzung nach einem der vorstehenden Ansprüche,
wobei die Menge des Geliermittels etwa 0,1 % bis etwa 5 % beträgt, und zwar auf das Trockengewicht bezogen.

10. Beschichtungszusammensetzung nach einem der vorstehenden Ansprüche, wobei das Geliermittel Guargummi aufweist.

11. Beschichtungszusammensetzung nach einem der vorstehenden Ansprüche, die bei 10 °C eine Viskosität von etwa 400 cP bis etwa 700 cP aufweist, wobei ein Brookfield-Viskosimeter mit einer Spindel Nr. 3 bis zu 60 U/min verwendet wird.

12. Nahrungsmittelzusammensetzung, die sich in der Mikrowelle kochen oder aufwärmen läßt,
die eine Beschichtung nach einem der Ansprüche 1 bis 11 aufweist.

## Revendications

1. Composition d'enrobage de produit alimentaire pouvant être réchauffée ou cuite au micro-ondes comprenant de 55 % à 80 % en poids d'eau et de 20 % à 45 % en poids d'un mélange comprenant en poids sec :
(a) 24 % à 32 % en poids d'amidon à haute teneur en amylose ;
(b) 35 % à 60 % en poids d'un composant à base de farine comprenant un mélange de deux ou plusieurs autres farines sans gluten, y compris de la farine de maïs ;
(c) un agent gélifiant;
(d) un adjuvant enzymatique comprenant de l'alpha-amylase ;
(e) d'autres ingrédients optionnels.

2. Composition d'enrobage selon la revendication 1, dans laquelle la composition comprend entre environ 40 % à environ 50 % en poids sec du composant à base de farine.

3. Composition d'enrobage selon l'une quelconque des revendications précédentes dans laquelle le composant à base de farine comprend un mélange de farine de soja et de farine de maïs.

4. Composition d'enrobage selon l'une quelconque des revendications précédentes, dans laquelle le mélange de farines présente une teneur en matière grasse comprise entre environ 15 % à environ 33 %.

5. Composition d'enrobage selon l'une quelconque des revendications précédentes, dans laquelle le rapport pondéral de farine par rapport au composant à base d'amidon est compris entre environ 36:64 et environ 87:13.

6. Composition d'enrobage selon l'une quelconque des revendications précédentes, dans laquelle le rapport pondéral de farine par rapport au composant à base d'amidon est compris entre environ 50:50 et environ 63:37.

7. Composition d'enrobage selon l'une quelconque des revendications précédentes, dans laquelle le composant à base de farine contient entre environ 25 % à environ 70 % en poids sec de farine de maïs et entre environ 30 % à environ 75 % en poids sec d'une ou plusieurs autres farines sans gluten.

8. Composition d'enrobage selon l'une quelconque des revendications précédentes, comportant du D-xylose dans une teneur comprise entre environ 1 % et environ 3 % en poids sec.

9. Composition d'enrobage selon l'une quelconque des revendications précédentes, dans laquelle la teneur en agent gélifiant est comprise entre environ 0,1 % en poids sec et environ 5 % en poids sec.

10. Composition d'enrobage selon l'une quelconque des revendications précédentes, dans laquelle l'agent gélifiant comprend de la gomme de guar.

11. Composition d'enrobage selon l'une quelconque des revendications précédentes, présentant une viscosité entre environ 400 cP et environ 700 cP à 10°C mesurée par viscosimètre Brookfield avec une broche numéro 3 à 60 tours la minute.

12. Composition alimentaire pouvant être réchauffée ou cuite au micro-ondes comprenant un enrobage selon l'une quelconque des revendications 1 à 11.
